## Europäisches Patentamt

## European Patent Office

## Office européen des brevets

(19)

(11) Veröffentlichungsnummer : **0 169 860**
**B1**

(12) **EUROPÄISCHE PATENTSCHRIFT**

(45) Veröffentlichungstag der Patentschrift :
04.05.88

(21) Anmeldenummer : 85900645.4

(22) Anmeldetag : 23.01.85

(86) Internationale Anmeldenummer :
PCT/DE 85/00019

(51) Int. Cl.⁴ : **E 01 F 8/00, A 01 G 9/00**

(54) TROCKENRASENBAUWERK.

(30) Priorität : 26.01.84 DE 3402531

(43) Veröffentlichungstag der Anmeldung :
05.02.86 Patentblatt 86/06

(45) Bekanntmachung des Hinweises auf die Patenterteilung : 04.05.88 Patentblatt 88/18

(84) Benannte Vertragsstaaten :
AT BE CH DE FR GB LI LU NL SE

(56) Entgegenhaltungen :
DE-A- 2 848 713
DE-A- 3 034 131
FR-A- 2 444 119

(73) Patentinhaber : Behrens, Wolfgang
Annen Nr. 2
D-2833 Gross Ippener (DE)

KRUPKA, Bernd
Heisterkamp 21
D-3167 Burgdorf OT Heessel (DE)

(72) Erfinder : Behrens, Wolfgang
Annen Nr. 2
D-2833 Gross Ippener (DE)
Erfinder : KRUPKA, Bernd
Heisterkamp 21
D-3167 Burgdorf OT Heessel (DE)

(74) Vertreter : Thömen, Uwe, Dipl.-Ing. et al
Patentanwalt U. Thömen Zeppelinstrasse 5
D-3000 Hannover (DE)

EP 0 169 860 B1

# 0 169 860

**Beschreibung**

Die Erfindung betrifft ein Trockenrasenbauwerk gemäß dem Obergegriff des Anspruchs 1. Dabei ist durch die Bezeichnung « Trockenrasenbauwerk » zum Ausdruck gebracht, daß es sich an extremen wasserarmen Standorten befinden kann.

Es gibt bereits Bauwerke mit Pflanzenbewuchs, denen mit einem allgemein zunehmenden Umweltbewußtsein eine immer größere Bedeutung zukommt. Häufig wirken nämlich die Außenwände von Bauwerken oder von Betonsteinen, die immer mehr zur Abgrenzung von Geländebereichen bzw. auch zur Böschungssicherung verwendet werden, optisch durch die technisch-konstruktiven Elemente sehr störend.

Durch die DE-C 29 20 700 ist es schon bekannt geworden, auf der Ansichtsfläche von Betonsteinen einen Vorsatz aus einem porösen, grobstrukturierten und biologisch aktiven Material anzuordnen. Dieser Vorsatz ermöglicht auf der Ansichtsfläche des Betonsteins ein natürliches Leben an Flora und Fauna, so daß die Oberfläche dann kein betonartiges Aussehen mehr besitzt, sondern durch die biologische Begrünung optisch angenehm wirkt. Allerdings ermöglicht der erwähnte Vorsatz lediglich einen Bewuchs mit Moosen, während sich ein Rasen nicht ausbilden kann.

In der DE-A 30 27 442 ist auch schon ein Bauwerk mit Pflanzenbewuchs zur Verwendung als Schallschutzwand beschrieben. Bei diesem bekannten Bauwerk bilden zwei im Abstand voneinander befindliche, als Rasenmatten ausgebildete Seitenwände einen Innenraum, der mit Erde verfüllt ist, um den Rasenbewuchs zu erhalten.

Meistens befinden sich die Bauwerke mit Pflanzenbewuchs an Wassermangelstandorten, denn die Standortwahl richtet sich — etwa bei der Schallschutzwand — nicht nach optimalen biologischen Gesichtspunkten, sondern nach künstlich geschaffenen Gegebenheiten (z. B. dem Verlauf eine Straße). Daher ist die Wasservorsorgung für den Pflanzenbewuchs solcher Bauwerke ein erhebliches Problem, das sich bisher nur durch zusätzliche Maßnahmen, wie z. B. eine Tröpfchenbewässerung lösen läßt, die mit einem Mehraufwand und mit Kosten verbunden sind.

Ein weiterer gravierender Nachteil des bekannten Bauwerks ist der Aspekt der mechanischen Stabilität. Die in den durch die Rasenmatten an beiden Seiten gebildeten Innenraum eingefüllte lose Erde verursacht einen beachtlichen Druck auf die seitlichen Rasenmatten. Aus Stabilitätsgründen sind daher aufwendige mechanische Hilfsmittel erforderlich, um die Druckbelastung aufzufangen.

Infolge des dauernden Druckes, dem die Rasenmatten ausgesetzt sind, können diese unter Umständen aufbrechen bzw. reißen, und als Folge einer solchen Beschädigung wird die Erdfüllung durch die Öffnung herausrieseln. Es sind dann teure Reparaturarbeiten notwendig.

Ferner besteht auch die Gefahr der Untergrabung oder Aushöhlung des Bauwerks bzw. der Erdfüllung durch Tiere, z. B. Ratten, mit der Folge, daß das Bauwerk einstürzen kann.

Um daher die unbedingt erforderliche mechanische Stabilität zu gewährleisten, besitzen die Rasenmatten bei dem bekannten Bauwerk besondere Stabstahlgitter, um die Rasenmatten zunächst einmal in sich stabil zu halten. Zusätzlich ist es erforderlich, die Stabstahlgitter mit Anker durch die Erdfüllung hindurch miteinander zu verbinden, um ein Ausweichen in Folge des Erddruckes zu verhindern. Diese mechanische Hilfskonstruktion zur Erzielung der gewünschten Stabilität ist aufwendig (Korrosionsgefährdung durch Tausalzsprühnebel) und trägt erheblich zu den Kosten des Bauwerks bei.

Das Problem der mechanischen Stabilität stellt sich zwar bei dem eingangs genannten Betonstein gemäß der DE-CS 29 20 700 nicht, allerdings ist auch ein solcher Betonstein teuer in der Herstellung, ganz abgesehen davon, daß dort wegen des fehlenden Erdbodens nur ein Bewuchs mit Moosen möglich ist.

Durch die DE-A 30 34 131 ist auch schon ein Trockenrasenbauwerk mit beidseitigen, vorgefertigten und vor der Montage bereits begrünten wandbildenden Elementen auf der Vorder- und Rückseite bekannt. Zwischen den wandbildenden Elementen befindet sich eine ein Nährmedium für die Vegetation der Wandelemente bildende Verfüllung. Als Nährmedium wird bei diesem bekannten Trockenrasenbauwerk normale Pflanzenerde vorgesehen.

Bei der Verwendung eines Trockenrasenbauwerks als Lärmschutzwand ist nun zu berücksichtigen, daß der Standort nicht nach biologischen Gesichtspunkten, sondern nach dem vorgegebenen Verlauf einer Straße bestimmt wird. Diese Vorgabe führt dazu, daß das Trockenrasenbauwerk häufig an solchen Standorten aufgebaut werden muß, an denen eine ausreichende Bewässerung nicht gegeben ist.

Bei dem bekannten Trockenrasenbauwerk gemäß der DE-A 30 34 131 sind deshalb zusätzliche Maßnahmen für eine ausreichende Bewässerung vorgesehen, und zwar dadurch, daß an den seitlichen wandbildenden Elementen, die durch Gerüstwände gebildet sind, schräg angeordnete Bretter befestigt werden. Durch die Schräglage der Bretter wird ein Auffangen des natürlichen Wasserniederschlages in Form von Regen und eine Weitergabe des Wassers an die zwischen den seitlichen Gerüstwänden befindliche Pflanzenerde ermöglicht. Diese Maßnahme ist allerdings vom natürlichen Wasserniederschlag abhängig, was bei längerer Dürre nicht ausreichend ist. Deshalb wird in der genannten DE-A 30 34 131 auch darauf hingewiesen, in solchen Fällen eine zusätzliche künstliche Bewässerung anzuwenden. In der Praxis bedeutet dies in nachteiliger Weise einen erheblichen zusätzlichen Aufwand, so daß das bekannte Trockenrasenbauwerk für extreme wasserarme Standorte nicht geeignet ist.

2

Der Erfindung liegt die Aufgabe zugrunde, ein Bauwerk — welches als neuartiges Trockenrasenbauwerk bezeichnet werden kann — zu schaffen, das mit einem Minimum an mechanischen Hilfsmitteln für die geforderte Stabilität auskommt und zudem völlig unabhängig und von dem jeweiligen Standort bzw. von einer Wasserversorgung ist.

Die Lösung dieser Aufgabe erfolgt bei dem im Oberbegriff des Anspruchs 1 genannten Trockenrasenbauwerk durch die im kennzeichnenden Teil des Anspruchs 1 angegebenen Merkmale.

Ein wesentliches Merkmal der Erfindung ist das Substrat, welches in neuartiger Weise als ein selbsttragendes standfestes, also in sich stabiles Substrat ausgebildet ist. Hierbei handelt es sich um eine überraschende Maßnahme, die entgegen dem bisherigen gärtnerischen Fachwissen erfolgt, denn man hat bei einem Nährboden bisher stets großen Wert darauf gelegt, einen Nährboden für Pflanzen oder dergleichen möglichst locker zu halten.

Demgegenüber wird bei der Erfindung das in den Innenraum zwischen die seitlichen Wände gefüllte Substrat durch Stampfen oder durch Rütteln mittels einer Rüttelmaschine verdichtet, und als Folge davon ergibt sich eine Verklebung der körnigen Bestandteile des Substrats, welches dadurch standfest und selbsttragend wird. Besonders vorteilhaft ist die Verklebung und damit die Standfestigkeit des Substrats, wenn diesem in zweckmäßiger Ausgestaltung der Erfindung modifizierter Trasskalkmörtel zugegeben ist.

Durch das standfeste Substrat wird sozusagen eine biologische Armierung und Erosionssicherung erzielt, mit der Folge, daß die eingangs erwähnten mechanischen Hilfsmittel wesentlich einfacher und nicht in dem erheblichen Umfang wie bisher ausgestaltet sein können, um insgesamt eine mechanische Stabilität des Trockenrasenbauwerks zu erzielen. Die seitlichen Wände sind wegen des sich selbstverstärkenden und standfesten Substrats keinem nennenswerten Druck mehr ausgesetzt, so daß eine gegenseitig Verankerung der seitlichen Wände entfallen kann.

Ein weiterer Vorteil, den das standfeste Substrat bietet, besteht darin, daß bei einer Beschädigung des Trockenrasenbauwerks durch Zerstörung der seitlichen Vegetationsmatten ein Herausrieseln des Substrats verhindert wird.

Als günstig ist auch zu erwähnen, daß das Trockenrasenbauwerk — bedingt durch die Verfestigung und den Steingehalt — nur sehr schwer von Tieren, z. B. Ratten unterhöhlt bzw. untergraben werden kann, wodurch die Einsturzgefahr verringert ist.

Man kann das durch Stampfen oder Rütteln verdichtete Substrat praktisch als einen Substrat-Block bezeichnen, wobei das überraschende Ergebnis ist, daß trotzdem ein Pflanzenbewuchs möglich ist. Um dies zu ermöglichen, umfaßt das Substrat in zweckmäßiger Weiterbildung der Erfindung einen Gehalt von Lava, Sand, gemahlenem Blähton, Kalkschotter und Basalt. Vorteilhaft ist die Zugabe von Ton, Rindenhumus und Lößlehm.

Zusammen mit den seitlichen Vegetationsmatten entsteht ein selbstregulierendes technisch-biologisches System mit einer dauerhaften Überlebens- und Entwicklungsfähigkeit der Vegetation auch an extremen wasserarmen Standorten.

Das neuartige Trockenrasenbauwerk läßt sich somit in vorteilhafter Weise als Lärmschutzwand an Straßen verwenden. Hierbei kann es vorkommen, daß im Winter in Folge des Tausalzes Tausalznebel auftreten, welche auf den Boden giftig einwirken. Die Giftwirkung des Tausalzes wird bei der Erfindung durch eine zweckmäßige Weiterbildung dadurch abgepuffert, daß dem Substrat Rohhumuskomponenten (Rindenhumus) beigegeben wird (etwa 15 Vol. %).

Durch das erfindungsgemäße Trockenrasenbauwerk läßt sich die Standfläche von Lärmschutzwänden auf geringe Abmessungen — z. B. ca. 1 m — reduzieren, und zwar unter Beibehaltung der optimalen Lärmschutzwirkung eines Erdkörpers. Die technischen Stütz- und Hilfskonstruktionen, auf die bei der Erfindung zwar nicht vollständig verzichtet wird, die aber wesentlich einfacher ausgebildet sein können, lassen sich durch die Vegetation auf den Vegetationsmatten nahezu vollständig überdecken, so daß ein optisch angenehmer Eindruck entsteht. Das Problem des sehr extremen Wassermangels wird durch die schon erwähnte vegetationstechnische Abstimmung zwischen dem Substrat und den Pflanzen der Vegetationsmatten gelöst. Es wird also durch das spezielle Substrat die Möglichkeit einer selbsterhaltenden Vegetationsdecke geschaffen, auf welcher Moose, Gräser, Kräuter und niedrige Gehölze wachsen können. Da das Trockenrasenbauwerk selbsterhaltend ist, erübrigt sich in vorteilhafter Weise die Pflege und Unterhaltung (Wässern, Düngen, Schneiden) der Anordnung.

Eine zweckmäßige Weiterbildung der Erfindung sieht vor, daß die seitlichen Vegetationsmatten nach außen gerichtete Ausbeulungen besitzen, wodurch die Oberfläche des Trockenrasenbauwerks vergrößert wird. Bei starkem Wasseranfall in Folge von Regen oder Wolkenbruch wird durch die Ausbeulungen der Wasserabfluß gebremst, wodurch Schäden vermieden werden. Außerdem kann mehr Wasser in die seitliche Wand einsickern anstatt ungenutzt abzufließen. Die bei der Erfindung verwendete Substratmischung ist hygroskopisch, das bedeutet, daß selbst auch Luftfeuchtigkeit aufgenommen und für die Pflanzen zur Verfügung gestellt werden kann. Hier hat die Oberflächenvergrößerung in Folge der Ausbeulungen die positive Wirkung, daß wegen der größeren Oberfläche auch mehr Wasser aufgenommen werden kann. Schließlich bieten die Ausbeulungen bzw. Ausrundungen auch optische Vorteile, weil eine eintönige Oberfläche vermieden wird.

Weitere vorteilhafte Ausgestaltungen der Erfindung sind in den Unteransprüchen angegeben und der Zeichnung zu entnehmen.

**0 169 860**

Nachfolgend wird die Erfindung an Hand des in der Zeichnung dargestellten Ausführungsbeispiels näher erläutert.

Es zeigen :

Fig. 1 eine Querschnittsansicht eines Trockenrasenbauwerks,

Fig. 2 eine Querschnittsansicht des verfüllten Substrats, und

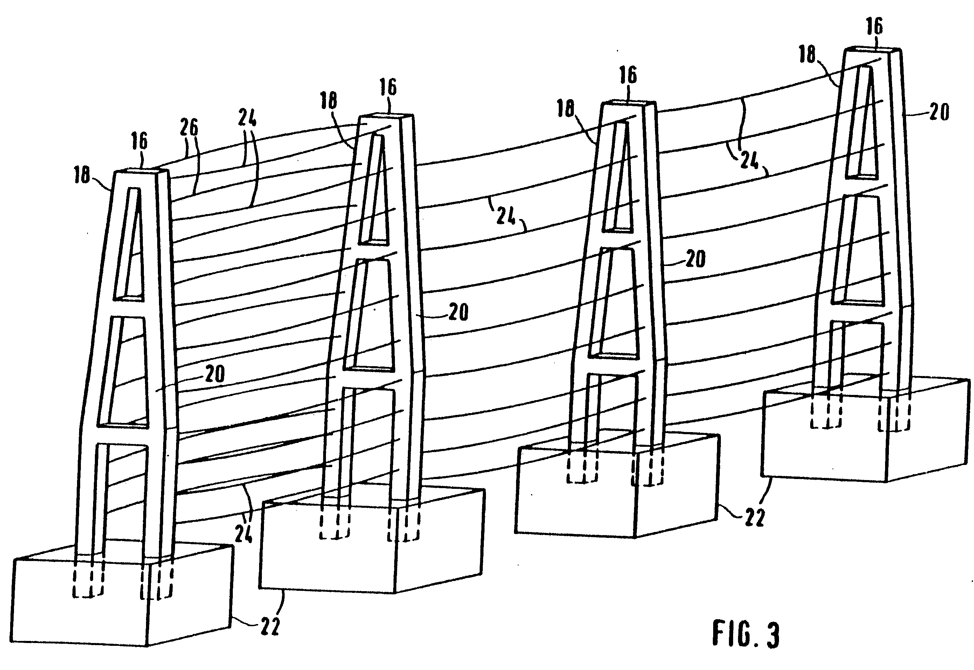

Fig. 3 eine perspektivische Prinzip-Darstellung einer mechanischen Hilfskonstruktion für das Trockenrasenbauwerk.

Das zeichnerisch dargestellte Trockenrasenbauwerk 10, welches sich vorteilhafterweise als Lärmschutzwand verwenden läßt, umfaßt ein Substrat 12 mit zwei Vegetationsmatten 28 und 30, welche die seitlichen Wände des Trockenrasenbauwerks 10 bilden. Als mechanische Stütz- bzw. Hilfskonstruktion sind im Abstand voneinander angeordnete Stützelemente 16 vorgesehen, die seitliche Stützarme 18 und 20 besitzen. Letztere sind im oberen Bereich des Trockenrasenbauwerks 10 dachförmig ausgebildet, so daß sich das Trockenrasenbauwerk 10 nach oben hin verjüngt.

Die Stützelemente 16 sind in Fundamenten 22 gehalten, welche sich in dem Erdboden 14 befinden.

Zwischen den Stützelementen 16 bzw. zwischen den seitlichen Stützarmen 18 und 20 erstrecken sich an den beiden äußeren Seiten mehrere im Abstand voneinander angeordnete und etwas durchhängende Seile 24 und 26. Von dem durch die Seile 24 und 26 gebildeten Innenraum des Trockenrasenbauwerks 10 her werden innen an die Seile 24 und 26 Vegetationsmatten 28 und 30 gelegt, und danach wird der Innenraum mit dem Substrat 12 verfüllt.

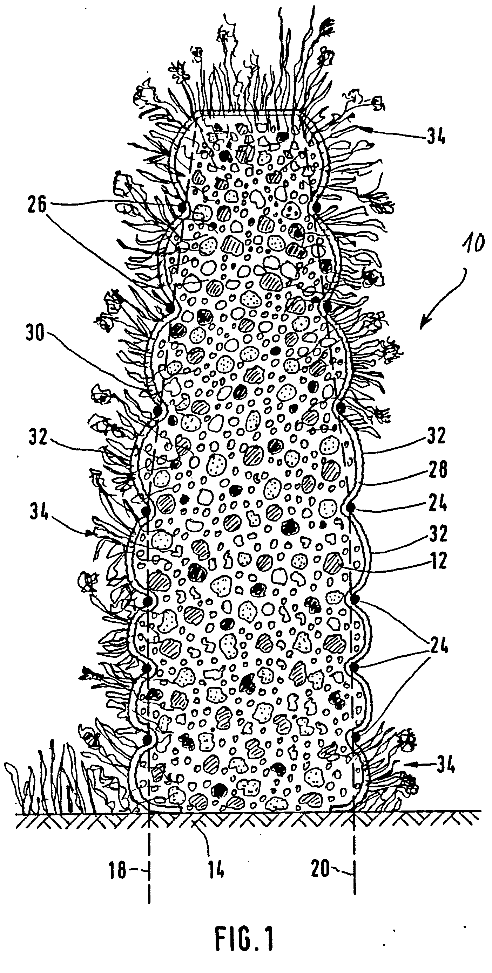

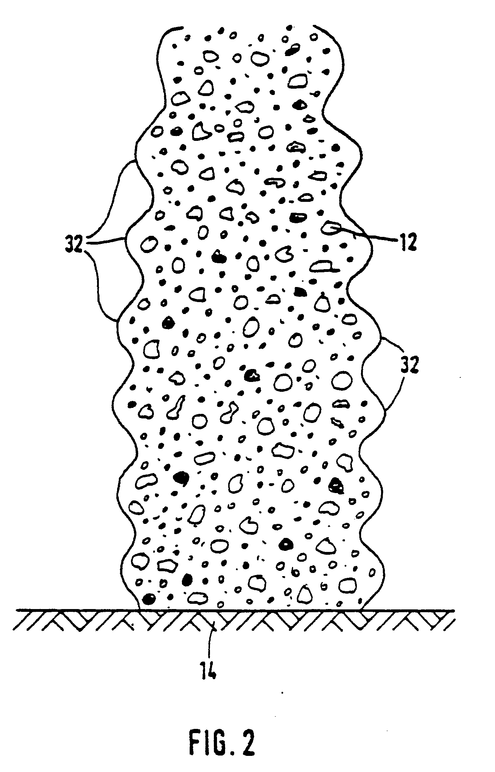

Wie in der Querschnittsansicht gemäß Fig. 1 zu erkennen ist, bilden sich dabei zwischen den einzelnen Seilen 24 und 26 Ausbeulungen 32 in den Vegetationsmatten 28 und 30 aus, was zu einer Vergrößerung der Oberfläche des Trockenrasenbauwerks 10 führt. Das in den durch die Vegetationsmatten 28 und 30 gebildeten Innenraum eingefüllte Substrat wird durch Stampfen oder Rütteln verdichtet, mit der Folge, daß ein standfestes in sich selbsttragendes Substrat entsteht, welches gemäß der Querschnittsansicht in Fig. 2 einen standfesten Substrat-Block bildet. Lediglich während der Verdichtung wird daher kurzzeitig ein Druck auf die seitlichen Vegetationsmatten 28 und 30 ausgeübt, während nach dem Verdichten der Substrat-Block ein in sich stabiles, selbsttragendes Element ist, so daß nach der Verdichtung kein Druck mehr auf die seitlichen Vegetationsmatten 28 und 30 ausgeübt wird.

Trotz der Verdichtung, die entgegen der bisherigen Meinung vorgenommen wird, einen Boden für Pflanzenbewuchs möglichst locker zu halten, ist das Substrat 12 als Nährmedium für die Vegetationsmatten 28 und 30 bzw. für den Pflanzenbewuchs 34 dieser Vegetationsmatten geeignet.

Bei den Vegetationsmatten 28 und 30 kann es sich um bereits vorgefertigte und mit Pflanzenbewuchs 34 versehene Vegetationsmatten handeln. Für den Pflanzenbewuchs 34 kommen Moose, Gräser, Kräuter und niedrige Gehölze in Betracht. Im Laufe der Zeit treiben die Pflanzen Wurzeln in das Substrat 12, wodurch eine zusätzliche mechanische Stabilität durch eine biologische Armierung erzielt wird. Dadurch wird die an sich schon vorhandene Standfestigkeit des Substrats 12 noch erhöht.

Die mechanisch stabile Eigenschaft des Substrats 12 durch Verdichten oder Rütteln läßt sich besonders vorteilhaft dann erreichen, wenn dem Substrat 12 modifizierter Trasskalkmörtel beigemischt wird, wodurch eine Verklebung der körnigen Bestandteile des Substrats 12 gefördert wird.

Bei dem modifizierten Trasskalkmörtel handelt es sich um einen Mörtel, der im trockenen Zustand mit etwa 10 Vol. % Bentonitmehl und 5 Vol. % Portlandzement vermengt worden ist. Eine besonders geeignete Mischung des Substrats 12 setzt sich wie folgt zusammen :

| | |
|---|---|
| Oolith- und Dolomitschotter 0 — 45 mm | 30 Vol. % |
| Lava oder Schlacke  0 — 65 mm | 20 Vol. % |
| Ton | 5 Vol. % |
| Lößlehm (B oder C-Horizont) | 20 Vol. % |
| Rindenhumus | 15 Vol. % |
| modifizierter Trasskalkmörtel | 10 Vol. % |
| | 100 Vol. % |

Das Substrat 12 ist hygroskopisch, so daß selbst auch Luftfeuchtigkeit pflanzenverfügbar aufgenommen werden kann. Das Substrat 12 stellt in Verbindung mit dem Pflanzenbewuchs 34 ein sich selbstregulierendes technisch-biologisches System mit einer dauerhaften Überlebens- und Entwicklungsfähigkeit der Vegetation auf den Vegetationsmatten 28 und 30 dar, wodurch auch auf extremen Standorten eine Vegetation ermöglicht wird. Dabei ist unter anderem die Verwendung von modifiziertem Trasskalkmörtel hervorzuheben, welcher wesentlich zu der hygroskopischen Eigenschaft beiträgt. Normalerweise wird der Mörtel in der gärtnerischen Technik als für Pflanzen giftig angesehen, gleichwohl liegt der Erfindung die Erkenntnis zugrunde, daß die Zumengung des modifizierten Trasskalkmörtels zu dem Substrat 12 auf überraschende Weise von vorteilhafter Wirkung ist.

Wie schon erwähnt, ermöglicht die vegetationstechnische Abstimmung zwischen dem Substrat 12 und den Vegetationsmatten 28 und 30 auch den Bewuchs mit Moosen. Hierbei ist als Vorteil zu nennen, daß die Moosschicht Luftfeuchtigkeit ansaugen und an das Substrat 12 weitergeben kann, wo sie von dem Trasskalkmörtelanteil aufgesogen wird.

4

Ein weiterer Vorteil ist auch noch darin zu sehen, daß die Steinanteile im Substrat 12 voll mit Humus ummantelt sind. Überraschend hat sich nämlich gezeigt, daß durch den Mischvorgang mit dem Humus eine Ummantelung der Steinanteile erfolgt. Dies hat eine gleichmäßige Verteilung der Humussubstanz zur Folge, und außerdem tritt eine erhebliche Verbesserung der Kapillarwirkung ein.

Insgesamt wird durch die Erfindung ein Trockenrasenbauwerk 10 geschaffen, welches optimal als Lärmschutzwand eingesetzt werden kann. Dabei ist durch die Bezeichnung « Trockenrasenbauwerk » zum Ausdruck gebracht, daß es sich an extremen wasserarmen Standorten befinden kann. Das Trockenrasenbauwerk 10 ist vollständig wartungsfrei, weil das Substrat 12 zusammen mit den Vegetationsmatten 28 und 30 bzw. mit dem Pflanzenbewuchs 34 ein selbsterhaltendes System bildet. Wegen des durch Verdichtung bzw. durch Verklebung selbsttragend gemachten Substrats 12 können die technischen Stütz- und Hilfskonstruktionen auf ein geringes Maß beschränkt werden.

**Patentansprüche**

1. Trockenrasenbauwerk, insbesondere Trockenrasenbauwerk mit Lärmschutzeigenschaften, mit beidseitigen, vorgefertigten und vor der Montage bereits begrünten wandbildenden Elementen (28, 30) auf der Vorder- und Rückseite, zwischen denen sich eine ein Nährmedium für die Vegetation der Wandelemente (28, 30) bildende Verfüllung (12) befindet, dadurch gekennzeichnet, daß die Verfüllung durch ein selbsttragendes standfestes Substrat (12) gebildet ist, und daß die Wandelemente aus Vegetationsmatten (28, 30) bestehen.

2. Trockenrasenbauwerk nach Anspruch 1, dadurch gekennzeichnet, daß das Substrat (12) mit modifiziertem Mörtel vermischt und durch Stampfen oder Rütteln oder dgl. standfest gemacht ist.

3. Trockenrasenbauwerk nach Anspruch 1 oder 2, dadurch gekennzeichnet, daß das Substrat (12) einen Gehalt von Lava, Sand, gemahlenem Blähton sowie zusätzlich von Kalkschotter und Basalt besitzt.

4. Trockenrasenbauwerk nach einem der Ansprüche 1-3, dadurch gekennzeichnet, daß der modifizierte Mörtel ein Trasskalkmörtel mit Bentonit als Zuschlag ist.

5. Trockenrasenbauwerk nach einem der Ansprüche 1-4, dadurch gekennzeichnet, daß im Abstand voneinander angeordnete Stützelemente (16) vorgesehen sind, zwischen denen sich das Trockenrasenbauwerk (10) erstreckt.

6. Trockenrasenbauwerk nach Anspruch 5, dadurch gekennzeichnet, daß zwischen den Stützelementen (16) auf beiden Seiten Seile (24, 26) gespannt sind, die einen Innenraum zur Aufnahme des Substrats (12) abgrenzen.

7. Trockenrasenbauwerk nach Anspruch 6, dadurch gekennzeichnet, daß vom Innenraum her an beiden Seiten die Vegetationsmatten (28, 30) an den Seilen (24, 26) anliegen.

8. Trockenrasenbauwerk nach Anspruch 6 oder 7, dadurch gekennzeichnet, daß die Vegetationsmatte (28, 30) jeweils zwischen zwei benachbarten Seilen (24, 26) eine nach außen gerichtete Ausbeulung (32) besitzt, wodurch die Oberfläche des Trockenrasenbauwerks (10) vergrößert wird.

9. Trockenrasenbauwerk nach einem der Ansprüche 1-8, dadurch gekennzeichnet, daß sich die seitlichen Wände zumindest im oberen Bereich des Trockenrasenbauwerks (10) nach oben hin verjüngen.

10. Trockenrasenbauwerk nach einem der Ansprüche 1-9, dadurch gekennzeichnet, daß die Vegetationsmatten (28, 30) vorgefertigte, bereits mit Pflanzenbewuchs (34) versehene Vegetationsmatten sind.

11. Trockenrasenbauwerk nach Anspruch 4, dadurch gekennzeichnet, daß dem Substrat (12) etwa 8 — 10 Vol. % modifizierter Trasskalkmörtel beigemischt ist.

12. Trockenrasenbauwerk nach Anspruch 11, dadurch gekennzeichnet, daß der Trasskalkmörtel im trockenen Zustand mit etwa 10 Vol. % Bentonitmehl und etwa 5 Vol. % Portlandzement vermengt ist.

13. Trockenrasenbauwerk nach Anspruch 11 oder 12, dadurch gekennzeichnet, daß dem Substrat (12) etwa 15 Vol. % Rindenhumus beigemischt ist.

14. Trockenrasenbauwerk nach einem der Ansprüche 3-13, dadurch gekennzeichnet, daß die Steinanteile (von Lava und Kalkschotter) im Substrat (12) mit Rindenhumus ummantelt sind.

15. Trockenrasenbauwerk nach einem der Ansprüche 1-14, dadurch gekennzeichnet, daß das Substrat (12) folgende Bestandteile aufweist :

| | |
|---|---|
| Oolith- und Dolomitschotter 0 — 45 mm | 30 Vol. % |
| Lava oder Schlacke          0 — 65 mm | 20 Vol. % |
| Ton | 5 Vol. % |
| Lößlehm (B oder C-Horizont) | 20 Vol. % |
| Rindenhumus | 15 Vol. % |
| modifizierter Trasskalkmörtel | 10 Vol. % |
| | 100 Vol. % |

16. Trockenrasenbauwerk nach Anspruch 5, dadurch gekennzeichnet, daß die Stützelemente (16) aus Kunstharzbeton bestehen.

## Claims

1. Dry lawn construction, especially dry lawn construction with noise protection properties, comprising prefabricated wall-forming elements (28, 30), already planted before erection, on the front and rear faces, between which there is a filling (12) forming a nutrient medium for the vegetation of the wall elements (28, 30), characterized in that the filling is formed of a self-supporting, firm substrate (12), and that the wall elements consist of vegetation mats (28, 30).

2. Dry lawn construction according to Claim 1, characterized in that the substrate (12) is mixed with modified mortar and is made firm by tamping or vibrating or the like.

3. Dry lawn construction according to Claim 1 or 2, characterized in that the substrate (12) has a content of lava, sand crushed expanded clay and additionally of crushed limestone and basalt.

4. Dry lawn construction according to one of Claims 1 to 3, characterized in that the modified mortar is a trass lime mortar with bentonite as additive.

5. Dry lawn construction according to one of Claims 1 to 4, characterized in that support elements (16) disposed at spacings one from another are provided, between which the dry lawn construction (10) extends.

6. Dry lawn construction according to Claim 5, characterized in that, between the support elements (16) on both sides, ropes (24, 26) are stretched, which define an internal space for receiving the substrate (12).

7. Dry lawn construction according to Claim 6, characterized in that the vegetation mats (28, 30) bear against the ropes (24, 26) at both sides from the inside.

8. Dry lawn construction according to Claim 6 or 7, characterized in that the vegetation mats (28, 30) each possess, between each two adjacent ropes (24, 26), an outwardly orientated bulge (32), by which the surface area of the dry lawn construction (10) is increased.

9. Dry lawn construction according to one of Claims 1 to 8, characterized in that the lateral walls converge upwards at least in the upper region of the dry lawn construction (10).

10. Dry lawn construction according to one of Claims 1 to 9, characterized in that the vegetation mats (28, 30) are prefabricated vegetation mats already furnished with plant growth (34).

11. Dry lawn construction according to Claim 4, characterized in that approximately 8-10 % by vol. of modified trass lime mortar is mixed with the substrate (12).

12. Dry lawn construction according to Claim 11, characterized in that the trass lime mortar is mixed in the dry state with approximately 10 % by vol. of bentonite flour and approx. 5 % by vol. of portland cement.

13. Dry lawn construction according to Claim 11 or 12, characterized in that approximately 15 % by vol. of bark humus is mixed with the substrate (12).

14. Dry lawn construction according to one of Claims 3 to 13, characterized in that the stone contents (of lava and crushed limestone) in the substrate (12) are encased in bark humus.

15. Dry lawn construction according to one of Claims 1 to 14, characterized in that the substrate (12) comprises the following constituents :

| | |
|---|---|
| Crushed oolitic and dolomitic limestone 0 — 45 mm | 30 % by vol. |
| Lava or slag 0 — 65 mm | 20 % by vol. |
| Clay | 5 % by vol. |
| Loess loam (B-formation or C-formation) | 20 % by vol. |
| Bark humus | 15 % by vol. |
| Modified trass lime mortar | 10 % by vol. |
| | 100 % by vol. |

16. Dry lawn construction according to Claim 5, characterized in that the support elements (16) are of synthetic resin concrete.

## Revendications

1. Construction de pelouse sèche, en particulier construction de pelouse sèche à propriété antibruit, comportant, des deux côtés, des éléments (28, 30) formant parois, préfabriqués et déjà gazonnés avant montage, sur les faces avant et arrière, entre lesquels se trouve un remplissage (12) formant un milieu nutritif pour la végétation des éléments de parois (28, 30), caractérisée en ce que le remplissage est formé par un substrat (12) solide et auto-porteur et en ce que les éléments de parois se composent de nattes de végétation (28, 30).

2. Construction de pelouse sèche suivant la revendication 1, caractérisée en ce que le substrat (12) est mélangé à du mortier modifié et est rendu solide par tassage, vibrations, etc.

3. Construction de pelouse sèche suivant la revendication 1 ou 2, caractérisée en ce que le substrat (12) comporte un contenu de lave, de sable, d'argile expansée broyée, avec, de plus, du calcaire concassé et du basalte.

4. Construction de pelouse sèche suivant l'une des revendications 1 à 3, caractérisée en ce que le mortier modifié est un mortier de chaux de tuf avec de la bentonite comme granulat.

5. Construction de pelouse sèche suivant l'une des revendications 1 à 4, caractérisée en ce que sont prévus, à distance les uns des autres, des éléments supports (16) entre lesquels se trouve la construction de pelouse sèche (10).

6. Construction de pelouse sèche suivant la revendication 5, caractérisée en ce qu'entre les éléments supports (16) sont tendus, de chaque côté, des câbles (24, 26) qui délimitent un espace intérieur destiné à recevoir le substrat (12).

7. Construction de pelouse sèche suivant la revendication 6, caractérisée en ce qu'à la limite externe de l'espace intérieur, sur les deux côtés, les nattes de végétation (28, 30) adhèrent aux câbles (24, 26).

8. Construction de pelouse sèche suivant la revendication 6 ou 7, caractérisée en ce que chaque natte de végétation (28, 30) comporte, entre deux câbles (24, 26) voisins, une bosse (32) dirigée vers l'extérieur, augmentant ainsi la surface de la construction de pelouse sèche (10).

9. Construction de pelouse sèche suivant l'une des revendications 1 à 8, caractérisée en ce que les parois latérales se réduisent vers le haut au moins dans la région supérieure de la construction de pelouse sèche (10).

10. Construction de pelouse sèche suivant l'une des revendications 1 à 9, caractérisée en ce que les nattes de végétation (28, 30) sont préfabriquées et déjà pourvues de pousses de plantes (34).

11. Construction de pelouse sèche suivant la revendication 4, caractérisée en ce qu'au substrat (12) est mélangé environ 8 à 10 % en volume de mortier de chaux de tuf.

12. Construction de pelouse sèche suivant la revendication 11, caractérisée en ce que le mortier de chaux de tuf est mélangé, à l'état sec, avec environ 10 % en volume de poudre de bentonite et environ 5 % en volume de ciment Portland.

13. Construction de pelouse sèche suivant la revendication 11 ou 12, caractérisée en ce qu'au substrat (12) est mélangé environ 15 % en volume d'humus d'écorce.

14. Construction de pelouse sèche suivant l'une des revendications 3 à 14, caractérisée en ce que les parties pierreuses (de lave et de calcaire concassé) sont, dans le substrat (12), enrobées d'humus d'écorce.

15. Construction de pelouse sèche suivant l'une des revendications 1 à 14, caractérisée en ce que le substrat (12) a la composition suivante :

| | |
|---|---|
| oolithe et dolomie concassées 0 à 45 mm | 30 % en vol. |
| lave ou scories                0 à 65 mm | 20 % en vol. |
| argile | 5 % en vol. |
| terre à brique (niveau B ou C) | 20 % en vol. |
| humus d'écorce | 15 % en vol. |
| mortier de chaux de tuf modifié | 10 % en vol. |
| | 100 % en vol. |

16. Construction de pelouse sèche suivant la revendication 5, caractérisée en ce que les éléments supports (16) sont en béton de résine synthétique.

7

FIG.1

1

FIG. 2

FIG. 3